**Europäisches Patentamt**

**European Patent Office**

**Office européen des brevets**

(19)

(11) Veröffentlichungsnummer: **0 285 549 B1**

# EUROPÄISCHE PATENTSCHRIFT

(12)

(45) Veröffentlichungstag der Patentschrift:
**18.09.91 Patentblatt 91/38**

(51) Int. Cl.⁵: **B29C 49/48, B65D 1/16**

(21) Anmeldenummer: **88730078.8**

(22) Anmeldetag: **30.03.88**

(54) **Kunststoff-Weithalsfass.**

(30) Priorität: 02.04.87 DE 3711172
01.07.87 DE 3721763

(43) Veröffentlichungstag der Anmeldung:
05.10.88 Patentblatt 88/40

(45) Bekanntmachung des Hinweises auf die
Patenterteilung:
18.09.91 Patentblatt 91/38

(84) Benannte Vertragsstaaten:
AT BE CH DE ES FR GB GR IT LI LU NL SE

(56) Entgegenhaltungen:
DE-A- 2 914 938
DE-A- 3 226 872
FR-A- 1 227 794
FR-A- 1 441 727
US-A- 4 170 623

(56) Entgegenhaltungen:
US-A- 4 228 122
PATENT ABSTRACTS OF JAPAN, Band 5, Nr.
116 (M-80)[788], 25. Juli 1981; & JP-A-56 56 830
(KIYOORAKU K.K.) 19-05-1981

(73) Patentinhaber: WESTPHAL & LANGE GMBH &
CO. KG
Spritzgusstechnik Kaltenweide Hainhas 2
W-3012 Langenhagen 5 (DE)
Patentinhaber: THEODOR FRIES
GESELLSCHAFT MBH & CO.
Schützenstrasse 19
A-6832 Sulz/Vorarlberg (AT)

(72) Erfinder: Brune, Hermann
Friedrichsstrasse 18
W-4902 Bad Salzuflen (DE)

(74) Vertreter: Thömen, Uwe, Dipl.-Ing.
Patentanwalt U. Thömen Zeppelinstrasse 5
W-3000 Hannover 1 (DE)

## Beschreibung

Die Erfindung betrifft ein Kunststoff-Weithalsfaß gemäß dem Oberbegriff des Anspruchs 1. Außerdem befaßt sich die Erfindung mit einem Verfahren zur Herstellung eines solchen Kunststoff-Weithalsfasses sowie mit einer Blasform zur Durchführung des Verfahrens.

Kunststoff-Weithalsfässer werden in zunehmendem Maße in vielen Bereichen der Industrie als Behälter auch für Flüssigkeiten benötigt. Neben der eigentlichen Funktionsaufnahme einer Flüssigkeit sind dabei Kriterien zu beachten, welche die Sicherheit der Kunststoff-Weithalsfässer während ihres Transportes und ihrer Lagerung sowie den vollständig dichten Verschluß mit einem Deckel betreffen.

Um diesen Ansprüchen zu genügen, werden Kunststoff-Weithalsfässer mit radial nach außen gerichteten Flanschringen und mit Spannringdeckelverschlüssen verwendet, und es ist schon bekannt, solche Kunststoff-Weithalsfässer nach dem Hohlkörperblasverfahren herzustellen. Eine besondere Bedeutung kommt dabei dem Flanschring zu.

Durch die DE-OS 2544491 ist bereits ein Kunststoff-Weithalsfaß bekannt, bei welchem der Flanschring aus einem gestauchten Mantelflansch besteht. Dieser wird beim Blasvorgang dadurch gebildet, daß Stauchringe der Blasform in Richtung der Flanschformringe des Fasses vertikal hydraulisch bewegt werden und somit die vorgeblasene Wandung des Fasses gestaucht wird.

Bei dem bekannten Kunststoff-Weithalsfaß bzw. bei dessen Herstellung besteht nun die Gefahr, daß der in die Blasform eingeführte Vorformling beim Stauchen zur Faßachse nach innen hin ausweicht, und/oder daß das dem Mantelflansch entsprechende Profil nicht ganz vollständig ausgefüllt wird. Als Folge davon ergeben sich mangelhafte Kunststoff-Weithalsfässer mit ungenügendem Flanschring, wodurch der Nachteil einer nicht sicheren Befestigung des Deckels bestehen kann.

Hier greift die Erfindung ein, der die Aufgabe zugrunde liegt, ein Kunststoff-Weithalsfaß mit einem stabilen sicheren Flanschring für einen Spannringdeckelverschluß zu schaffen und außerdem ein Verfahren zur zuverlässigen Herstellung des Flanschringes sowie eine Blasform zur Durchführung des Verfahrens anzugeben.

Die Lösung dieser Aufgabe erfolgt bei dem im Oberbegriff des Anspruchs 1 genannten Kunststoff-Weithalsfaß durch die im kennzeichnenden Teil angegebenen Merkmale ; hinsichtlich des Verfahrens und der Blasform wird die gestellte Aufgabe durch die Merkmale der Ansprüche 2 bzw. 7 gelöst.

Die Erfindung zeigt überraschend einen neuen Weg für ein Kunststoff-Weithalsfaß auf, wobei der Grundgedanke der Erfindung darin besteht, in völliger Abkehr von dem Stauchen mit in vertikaler Richtung der Faßachse wirkenden Kräften eine radiale — also waagerechte — Verstreckung vorzunehmen.

Während bisher die Formhälften der Blasform in Achsrichtung des Fasses vertikal bewegt werden mußten, beschreitet die Erfindung den neuen Weg, einen radial bewegbaren Schieber zu verwenden, welcher ein kreisförmig umlaufendes Nest umfaßt, dessen Kontur dem Flanschring angepaßt ist. Dadurch ist eine radiale Verstreckung des Vorformlings möglich, indem der Schieber gegen den vollen Blasdruck waagerecht nach innen eingefahren wird, wodurch sich die Kragenkontur des Flanschringes ergibt.

Das Prinzip der radialen Verstreckung bildet als bedeutsamen Vorteil einen Ansatzpunkt dafür, die beim Stauchen mögliche Gefahr des seitlichen Ausweichens zu vermeiden, insbesondere dann, wenn gemäß einer zweckmäßigen Ausgestaltung der Erfindung der Schieber in einen oberen ersten und einen unteren zweiten Schieber aufgeteilt ist. In dem Kopfteil der Blasform kann oberhalb des ersten Schiebers eine Kammer vorgesehen werden, in welche ein Teil der Wandung des Vorformlings eingeblasen wird. Dann besteht die Möglichkeit, zunächst den ersten Schieber radial nach innen gegen einen Anschlag einzufahren und im Anschluß daran wird in einer zweiten Phase mit zeitlicher Verzögerung der zweite Schieber ebenfalls radial eingefahren. Durch diese beiden zeitlich versetzten Phasen ist die Gefahr eines Ausweichens vermieden, da der Vorformling durch den zuerst eingefahrenen ersten Schieber in diesem Bereich sozusagen festgehalten wird, wenn danach der zweite Schieber radial eingefahren wird.

In vorteilhafter Weiterbildung der Erfindung ist der Schieber durch vier einzelne Segmentschieber gleicher Bogenlänge gebildet, die symmetrisch und gleichförmig bzw. gleichsinnig radial verfahrbar sind. In ihrer dem Fertigungszustand zugeordneten Position berühren sich die vier Segmentschieber an ihren Stirnflächen formschlüssig und bilden somit eine geschlossene Kreisform. Beim radialen Ausfahren der vier Segmentschieber würden sich im Bereich der Stirnflächen Lücken bilden, und diese werden nun gemäß einer zweckmäßigen Ausgestaltung der Erfindung durch Ausgleichsschieber geschlossen. Obwohl sich also beim radial Verfahren der Segmentschieber der Innendurchmesser der jeweils gebildeten Kreisform laufend verändert, wird immer eine in sich geschlossene Umfangsfläche durch die Ausgleichsschieber gewährleistet.

Andere vorteilhafte Weiterbildungen der Erfindung ergeben sich aus den Ansprüchen, der Beschreibung und der Zeichnung.

Nachfolgend wird die Erfindung anhand der in der Zeichnung dargestellten Ausführungsbeispiele näher erläutert. Es zeigen :

Fig. 1    eine Teildarstellung einer Blasform mit ausgefahrenem Schieber,

Fig. 2    eine Darstellung gemäß Fig. 1, jedoch mit eingefahrenem Schieber,

Fig. 3    eine schematische Ansicht eines Schiebers, der aus vier Segmentschiebern mit Ausgleichsschiebern besteht,

Fig. 4    einen Ausgleichsschieber bei eingefahrenen Segmentschiebern,

Fig. 5    einen Ausgleichsschieber bei ausgefahrenen Segmentschiebern,

Fig. 6    eine andere Ausführungsform eines Schiebers, der durch einen ersten und einen zweiten Schieber gebildet ist, und

Fig. 7    ein Kunststoff-Weithalsfaß.

Die als Ganzes mit der Bezugsziffer 10 bezeichnete Blasform für das Hohlkörperblasverfahren besitzt ein Kopfteil 12, ein unteres Formteil 16 sowie einen dazwischen angeordneten radial in Richtung der Pfeile B und C bewegbaren Schieber 14. Mit der Blasform 10 läßt sich ein in Fig. 7 gezeigtes Kunststoff-Weithalsfaß 30 mit einem Flanschring 28 herstellen, was weiter unten noch näher beschrieben wird.

Das Kopfteil 12 der Blasform 10 besitzt an seiner dem Schieber 14 zugewandten Seite einen Anschlag 20, an die sich eine ringförmig umlaufende Kammer 18 anschließt. Der Schieber 14 weist im Bereich des Flanschringes ein umlaufendes Nest 24 auf, dessen Kontur dem Flanschring angepaßt ist, und welches oben in eine Schneidkante 22 einmündet.

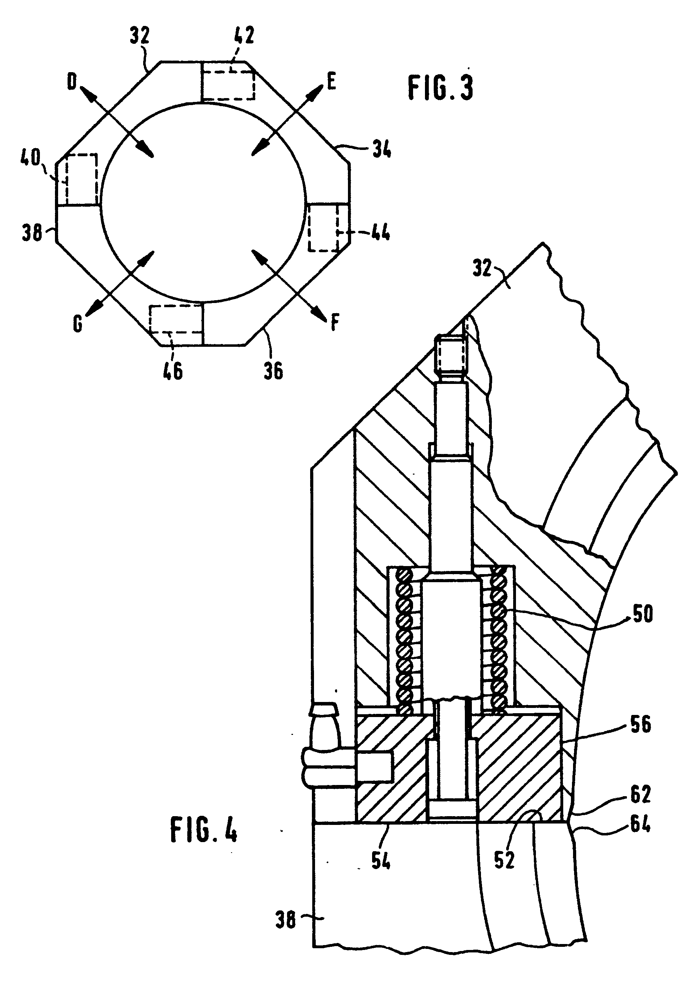

Der Schieber 14 ist gemäß der Darstellung in Fig. 3 durch vier einzelne Segmentschieber 32, 34, 36 und 38 gebildet, die jeweils einen Viertel-Kreisbogen abdecken.

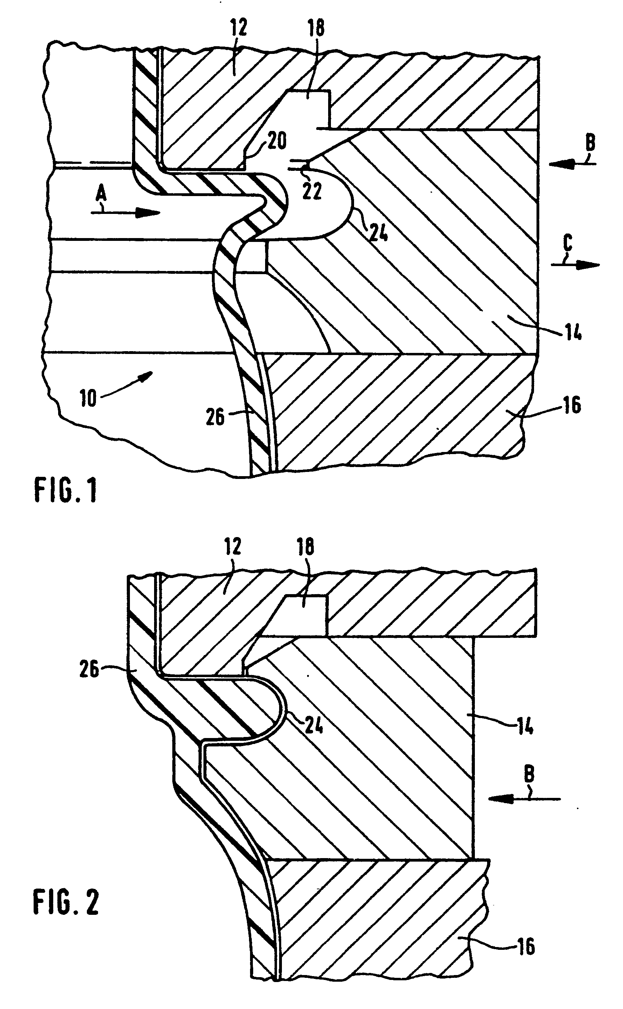

Mit Hilfe einer nicht gezeigten hydraulischen Antriebsvorrichtung können die vier Segmentschieber 32-38 im Gleichlauf synchron radial bewegt werden, was durch die Doppelpfeile D, E, F und G angedeutet ist. In ihrer eingefahrenen Stellung liegen die Segmentstirnflächen der einzelnen Segmentschieber 32-38 formschlüssig aneinander, und in dieser dem Fertigungszustand entsprechenden Stellung bilden die Segmentschieber einen geschlossenen Kreisumfang, so daß die in Fig. 1 und 2 in der Querschnittsansicht erkennbare Kontur mit dem Nest 24 kreisförmig geschlossen umlaufend ausgebildet ist.

Beim Ausfahren der Segmentschieber 32-38 im Gleichlauf vergrößert sich der Innendurchmesser der vorherigen Kreisform, und zwischen den einzelnen Segmentschiebern bilden sich dadurch Lücken. Diese Lücken werden durch Ausgleichsschieber 40, 42, 44 und 46 geschlossen, wobei jedem Segmentschieber an seinem einen Ende Ausgleichsschieber zugeordnet ist. Durch die Ausgleichsschieber wird also erreicht, daß dann, wenn sich der durch die Segmentschieber gebildete Ring ausweitet (Segmentschieber werden ausgefahren) oder verjüngt (Segmentschieber werden eingefahren), stets ein in sich geschlossener Kreis erhalten bleibt.

Die Ausgleichsschieber 40-46 besitzen im Querschnitt das gleiche Profil wie die Segmentschieber 32-38, so daß die in Fig. 1 und 2 im Querschnitt erkennbare Kontur erhalten bleibt.

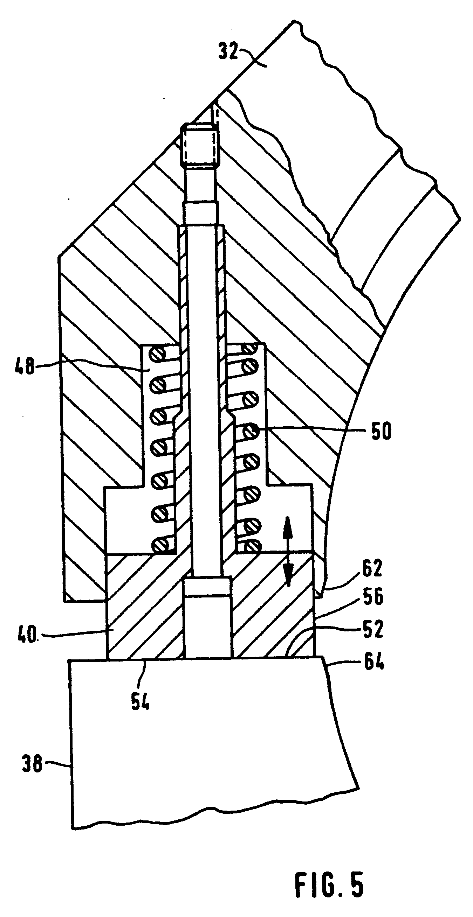

Der nähere Aufbau eines Ausgleichsschiebers, die gemäß Fig. 3 angeordnet sind, ergibt sich aus den Darstellungen in Fig. 4 und 5. In Fig. 4 ist der Fertigungszustand gezeigt, wenn also die Segmentschieber 32-38 eingefahren und formschlüssig aneinander liegen, während die Darstellung in Fig. 5 den ausgefahrenen Zustand der Segmentschieber 32-38 betrifft.

Innerhalb des Segmentschiebers 32 ist eine Federkammer 48 vorgesehen, in der sich eine Feder 50 befindet. Unter Einwirkung dieser Feder wird der Ausgleichsschieber 40 mit seiner Schieberstirnfläche 52 gegen die Segmentstirnfläche 54 des benachbarten Segmentschiebers 38 gedrückt. Der innere Umfang der einzelnen Segmentschieber 32-38 ist im Bereich der Stirnflächen im Sinne einer geringfügigen Vergrößerung des Innendurchmessers schräg verlaufend ausgestaltet, was durch die Bezugsziffern 62 und 64 verdeutlicht wird. Diese geringe Abschrägung 62 bzw. 64 sind ohne merkbaren Einfluß auf den hergestellten Flanschring.

Fig. 5 zeigt die Segmentschieber 32 und 38 im ausgefahrenem Zustand, und es ist zu erkennen, daß der unter Einwirkung der Feder 50 stehende Ausgleichsschieber 40 mit seiner Profilfläche 56 nun einen Teil des nach wie vor geschlossenen vergrößerten Kreisbogens bildet. Die Profilfläche 57 entspricht dem in Fig. 1 und 2 gezeigten Profil des Schiebers 14 bzw. der einzelnen Segmentschieber 32-38.

Für die Herstellung des Kunststoff-Weithalsfasses 30 mit dem Flanschring 28 wird der Vorformling 26 ausgestoßen, die Segmentschieber 32-38 werden radial nach außen ausgefahren, und die Blasform 10 wird geschlossen. Danach wird Aufgeblasen bzw. Vorgeblasen, wobei der Vorformling 26 schon etwa die in Fig. 1 gezeigte konturabhängige Lage einnimmt.

Danach werden die Segmentschieber 32-38 gegen den vollen Blasdruck (vgl. Pfeil A) eingefahren, wie dies in Fig. 2 dargestellt ist. Dabei bildet sich entsprechend der Kontur der Segmentschieber 32 bzw. entsprechend der Form des Nestes der gewünschte Flanschring aus. In an sich bekannter Weise verschweißen die im Bereich des Nestes übereinander liegenden Wandbereiche des Vorformlings 26 miteinander, wodurch die Verdickung in Form des Flanschringes 28 entsteht.

Das Einfahren der Segmentschieber 32 gegen den vollen Blasdruck erfolgt mit relativ hoher Geschwindigkeit, um die gewünschte Verschweißung zu erreichen.

Nach einer gewissen Kühlzeit wird die Blasform 10 wieder geöffnet, die Segmentschieber 32 werden ausgefahren, und das Faß 30 kann entnommen werden.

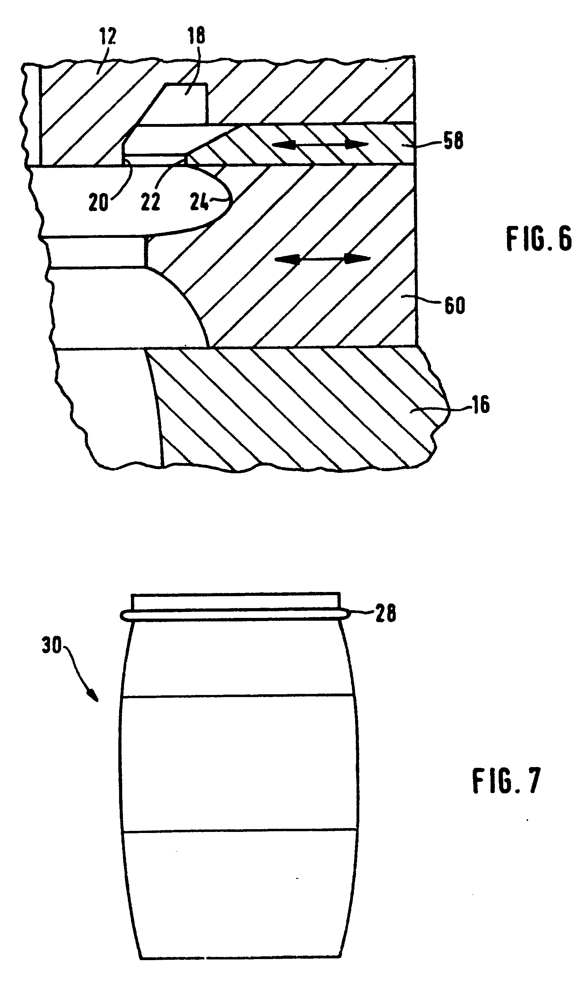

Eine besonders vorteilhafte Ausführungsform der Erfindung ist in Fig. 6 dargestellt. Der Schieber umfaßt hier einen oberen ersten Schieber 58 und einen unteren zweiten Schieber 60, die beide unabhängig voneinander ein- und ausfahrbar sind. Der Vorformling 26 kann in die Kammer 18 vorgeblasen werden, und es wird dann zunächst der erste Schieber 58 eingefahren, wobei die Schneidkante 22 gegen den Anschlag 20 stößt und den Vorformling 26 hier sozusagen festhält. Im Anschluß daran wird nun der zweite Schieber 60 eingefahren, um den Flanschring 28 zu erzeugen.

Im Zusammenhang mit der Kammer 18 wird hier in vorteilhafter Weise durch die Kammer 18 für das Material des Vorformlings 26 eine Ausweichmöglichkeit geschaffen, um die nachfolgende Wanddicke des Vorformlings 26 ergiebiger versorgen zu können. Die Kammer 18 erlaubt es also, Schlauchreserven bzw. Materialreserven des Vorformlings aufzunehmen.

## Patentansprüche

1. Kunststoff-Weithalsfaß mit einem radial nach außen gerichteten Flanschring und mit einem Spannringdeckelverschluß, wobei das Kunststoff-Weithalsfaß nach dem Blasverfahren mit einem in eine Blasform eingeführten Vorformling hergestellt ist, dadurch gekennzeichnet, daß der Flanschring (28) als eine solche Verdickung (Profil) ausgebildet ist, die durch radiale Verstreckung der Wand des Vorformlings (26) gebildet ist, wobei die radiale Verstreckung gegen einen Blasdruck (A) durch ein ringförmig umlaufendes und in radialer Richtung (B, C) bewegbares Nest (24) erfolgt, dessen innere Umfangsfläche bei der radialen Bewegung (B, C) geschlossen bleibt.

2. Verfahren zur Herstellung eines Kunststoff Weithalsfasses mit einem radial nach außen gerichteten Flanschring und mit einem Spannringdeckelverschluß, unter Anwendung des Hohlkörperblasverfahrens, wobei ein Vorformling in eine Blasform eingeführt wird, dadurch gekennzeichnet, daß zur Erzeugung des Flanschringes (28) ein Wandbereich des Vorformlings (26) unter radial nach außen wirkendem Blasdruck (A) in ein ringförmig umlaufendes, durch Segmentschieber (32-38) und Ausgleichsschieber (40-46) gebildetes Nest (24) gedrückt wird, daß die Segmentschieber (32-38) bei weiter vorhandenem Blasdruck gleichzeitig radial (B) nach innen eingefahren werden, und daß die Segmentschieber (32-38) nach erfolgter Abkühlung radial (C) nach außen ausgefahren werden.

3. Verfahren nach Anspruch 2, dadurch gekennzeichnet, daß mehrere, insbesondere vier Segmentschieber (32-38) gleicher Bogenlänge verwendet werden, die symmetrisch und gleichförmig ein- und ausgefahren werden können, wobei jedem Segmentschieber (32-38) an seinem einem Ende ein Ausgleichsschieber (40-46) zugeordnet ist, welche die beim Ausfahren der Segmentschieber (32-38) entstehenden Lücken ausfüllen.

4. Verfahren nach Anspruch 3, dadurch gekennzeichnet, daß die Segmentschieber (32-38) hydraulisch angetrieben werden.

5. Verfahren nach einem der vorhergehenden Ansprüche 2-4, dadurch gekennzeichnet, daß der Schieber (14) in einen ersten, oberen Schieber (58) und einen zweiten, unteren Schieber (60), der im wesentlichen das Nest (24) beinhaltet, aufgeteilt wird, und daß zunächst der erste Schieber (58) und zeitlich danach der zweite Schieber (60) eingefahren werden.

6. Verfahren nach Anspruch 5, dadurch gekennzeichnet, daß ein Wandbereich des Vorformlings (26) in eine oberhalb des ersten Schiebers (58) befindliche Kammer (18) eingeblasen wird.

7. Blasform zur Durchführung des Verfahrens nach den Ansprüchen 2-6, gekennzeichnet durch ein stationäres Kopfteil (12), ein stationäres unteres Formteil (16) und einen dazwischen befindlichen, in radialer Richtung (B, C) waagerecht bewegbaren Schieber (14) mit einem ringförmig umlaufenden Nest (24), dessen Kontur dem Flanschring (28) angepaßt ist.

8. Blasform nach Anspruch 7, dadurch gekennzeichnet, daß der Schieber (14) durch vier radial ein- und ausfahrbare Segmentschieber (32-38) gleicher Bogenlänge gebildet ist, die im eingefahrenen Zustand eine geschlossene Kreisform bilden.

9. Blasform nach Anspruch 8, dadurch gekennzeichnet, daß jeder Segmentschieber (32-38) an seinem einen Ende je einen Ausgleichsschieber (40-46) besitzt, welche die beim Ausfahren der Segmentschieber (32-38) zwischen ihnen entstehenden Lücken ausfüllen.

10. Blasform nach Anspruch 9, dadurch gekennzeichnet, daß die Profilform der Ausgleichsschieber (40-46) gleich der Profilform der Segmentscheiben (32-38) ist.

11. Blasform nach Anspruch 9 und/oder 10, dadurch gekennzeichnet, daß die Ausgleichsschieber (40-46) unter der Einwirkung von ihnen zugeordneten Federn (50) stehen und mit ihren Schieberstirnflächen (52) an den Segmentstirnflächen (54) des jeweils benachbarten Segmentschiebers (32-38) anliegen.

12. Blasform nach einem der vorhergehenden Ansprüche 7-11, dadurch gekennzeichnet, daß im Kopfteil (12) eine umlaufende Kammer (18) vorgesehen ist.

13. Blasform nach einem der vorhergehenden Ansprüche 7-12, dadurch gekennzeichnet, daß der Schieber (14) in einen ersten oberen Schieber (58) und einen zweiten unteren Schieber (60) aufgeteilt ist, die unabhängig voneinander radial verfahrbar sind.

14. Blasform nach Anspruch 13, dadurch gekennzeichnet, daß der erste (58) und zweite Schieber (60) jeweils durch zugeordnete erste und zweite Segmentschieber mit zugeordneten Ausgleichsschiebern gebildet sind.

15. Blasform nach einem der vorhergehenden Ansprüche 7-14, gekennzeichnet durch eine hydraulische Antriebsvorrichtung zur gleichförmigen symmetrischen radialen Bewegung der Segmentschieber.


## Claims

1. Wide-necked plastic barrel with a radially outwardly directed flanged ring and with a lid locking device, the wide-necked plastic barrel being produced by the blow moulding process with a preform introduced into a blow mould, characterized in that the flanged ring (28) being constructed as a thickened part (profile), which is formed by the radial stretching of the wall of the preform (26), the radial stretching taking place against a blowing pressure (A) through a circular all-round, radially movable (B, C) pocket (24), whose inner circumferential surface remains closed during the radial movement (B, C).

2. Process for producing a wide-necked plastic barrel with a radially outwardly directed flanged ring and with a lid locking device using a blow moulding process, in which a preform is introduced into a blow mould, characterized in that for producing the flanged ring (28), accompanied by a radially outwardly acting blowing pressure (A), a wall area of the preform (26) is pressed into a circular all-round pocket (24) formed by segmental slides (32-38) and compensating slides (40-46), that the segmental slides (32-38), when the blowing pressure persists, are simultanesously inwardly and radially (B) retracted and that the segmental slides (32-38), after cooling has taken place, are radially (C) outwardly extended.

3. Process according to claim 2, characterized in that several and in particular four segmental slides (32-38) of the same arc length are used, which can be simultaneously and uniformly retracted and extended and with each segmental slide (32-38) at one end of thereof is associated a compensating slide (40-46), which fill the gaps occurring on extending the segmental slide (32-38).

4. Process according to claim 3, characterized in that the segmental slide (32-38) are hydraulically driven.

5. Process according to one of the preceding claims 2-4, characterized in that the slides (14) are subdivided into a first, upper slide (58) and a second, lower slide (60), which substantially incorporates the pocket (24) and that initially the first slide (58) and subsequently the second slide (60) are retracted.

6. Process according to claim 5, characterized in that a wall area of the preformed (26) is blown in to a chamber (18) located above the first slide (58).

7. Blow mould for performing the process according to claims 2 to 6, characterized by a stationary top part (12), a stationary lower mould part (16) and an intermediate, radially (B, C), horizontally movable slide (14) with a circular all-round pocket (24), whose contour is adapted to the flanged ring (28).

8. Blow mould according to claim 7, characterized in that the slide (14) is formed by four radially retractable and extendable segmental slides (32-38) of the same arc length, which in the retracted state form a closed circular shape.

9. Blow mould according to claim 8, characterized in that on its one end each segmental slide (32-38) has a compensating slide (40-46) which fill the gaps occurring between them on extending the segmental slides (32-38).

10. Blow mould according to claim 9, characterized in that the profile shape of the compensating slide (40-46) is the same as the profile shape of the segmental slides (32-38).

11. Blow mould according to claims 9 and/or 10, characterized in that the compensating slides (40-46) are under the action of springs (50) associated therewith and engage with their slide faces (52) on the faces (54) of the in each case adjacent segmental slide (32-38).

12. Blow mould according to one of the preceding claims 7 to 11, characterized in that there is an all-round chamber (18) in the top part (12).

13. Blow mould according to one of the preceding claims 7 to 12, characterized in that the slide (14) is subdivided into a first upper slide (58) and a second lower slide (60), which are radially movable independently of one another.

14. Blow mould according to claim 13, characterized in that the first (58) and second (60) slides are in each case formed by associated first and second segmental slides with associated compensating slides.

15. Blow mould according to one of the preceding claims 7 to 14, characterized by a hydraulic driving means for the uniform, symmetrical radial movement of the segmental slides.

## Revendications

1. Cuve à col large en matière plastique comprenant un collier radial orienté vers l'extérieur, et une fermeture par couvercle à bague élastique, la cuve à col large en matière plastique étant fabriqué suivant le procédé de soufflage, avec une préforme introduite dans un moule de soufflage, caractérisé en ce que le collier (28) est conçu comme un renflement (profil) formé par un étirage radial de la paroi de la préforme, qui a lieu contre une pression de soufflage (A) passant dans une poche (24) périphérique, annulaire et déplaçable dans le sens radial (B, C), dont la surface circonférentielle interne reste fermée pendant le mouvement radial (B, C).

2. Procédé de fabrication d'une cuve à col large en matière plastique comportant un collier radial orienté vers l'extérieur, et une fermeture par couvercle à bague élastique, mettant en oeuvre le procédé de l'extrusion-soufflage, une préforme étant introduite dans un moule de soufflage, caractérisé en ce que, pour réaliser le collier (28), une zone de la paroi de la préforme (26) est pressée à l'aide d'une pression de soufflage (A) agissant radialement vers l'extérieur, dans une poche (24), formée par des tiroirs à segments (32 à 38) et des tiroirs compensateurs (40 à 46), en ce que les tiroirs-segments (32 à 38) sont, à pression de soufflage continue, radialement rentrés (B) à l'intérieur et, en ce qu'après le refroidissement, ils sont radialement ressortis (C) à l'extérieur.

3. Procédé suivant la revendication 2, caractérisé en ce que sont prévus plusieurs, notamment quatre, tiroirs à segments (32 à 38), d'une longueur d'arc identique, pouvant être symétriquement et uniformément rentrés ou sortis, chacun des tiroirs à segments (32 à 38) étant, à sa première extrémité, associé à un tiroir compensateur (40 à 46) qui comblent les vides qui se forment lors de la sortie des tiroirs à segments (32 à 38).

4. Procédé suivant la revendication 3, caractérisé en ce que les tiroirs à segments (32 à 38) sont actionnés hydrauliquement.

5. Procédé suivant une des revendications précédentes 2 à 4, caractérisé en ce que le tiroir (14) est divisé en un premier tiroir supérieur (58) et un second tiroir inférieur (60), qui contient essentiellement la poche (24) et en ce que c'est d'abord le premier tiroir (58), qui est rentré et ensuite, dans le temps, le second tiroir (60).

6. Procédé suivant la revendication 5 caractérisé en ce qu'une zone de la paroi de la préforme (26) est soufflée dans une chambre (18) se trouvant au-dessus du premier tiroir (58).

7. Moule de soufflage pour l'exécution du procédé suivant les revendications 2 à 6, caractérisé par une pièce de tête fixe (12), une pièce de moule inférieure fixe (16) et un tiroir (14) déplaçable horizontalement dans le sens radial (B, C), avec une poche périphérique, annulaire (24), dont les contours sont de forme à épouser le collier (28).

8. Moule de soufflage suivant la revendication 7 caractérisé en ce que le tiroir (14) comprend quatre tiroirs à segments (32 à 38) pouvant être radialement rentrés ou sortis, de longueur d'arc identique, qui forment en l'état rentré un cercle fermé.

9. Moule de soufflage suivant la revendication 8 caractérisé en ce que chaque tiroir à segment (32 à 38) possède sur une de ses extrémités un tiroir compensateur (40 à 46) pour combler les vides formés entre les tiroirs à segments lorsque ceux-ci sont sortis.

10. Moule de soufflage suivant la revendication 9 caractérisé en ce que la forme du profil des tiroirs compensateurs (40 à 46) est identique à celle des tiroirs à segments (32 à 38).

11. Moule de soufflage suivant les revendications 9 et 10 caractérisé en ce que les tiroirs compensateurs (40 à 46) se trouvent sous l'influence de ressorts (50), qui leur sont associés, les faces frontales (52) des tiroirs compensateurs reposant respectivement contre les faces frontales (54) des tiroirs à segments voisins.

12. Moule de soufflage suivant une des revendications précédentes 7 à 11, caractérisé en ce qu'une chambre périphérique (18) est prévue dans la pièce de tête (12).

13. Moule de soufflage suivant une des revendications précédentes 7 à 12, caractérisé en ce que le tiroir (14) est divisé en un premier tiroir supérieur (58) et un second tiroir inférieur (60), pouvant être radialement déplacés indépendamment l'un de l'autre.

14. Moule de soufflage suivant la revendication 13 caractérisé en ce que le premier tiroir (58) et le second tiroir (60) sont respectivement formés par un premier et un second tiroir à segment avec des tiroirs compensateurs associés.

15. Moule de soufflage suivant une des revendications précédentes 7 à 14, caractérisé par un dispositif d'actionnement hydraulique pour le mouvement radial symétrique et uniforme des tiroirs à segments.

FIG. 1

FIG. 2

FIG.3

FIG.4

FIG. 5

FIG. 6

FIG. 7